# EUROPEAN PATENT APPLICATION

(11) **EP 4 722 496 A1**
(43) Date of publication of application: **08.04.2026**
(21) Application number: 25206437.3
(22) Date of filing: 02.10.2025
(51) Int. Cl.: F01D 5/08, F01D 5/30

(54) **APPARATUS FOR A TURBINE ENGINE**

(30) Priority: 02.10.2024 US 202418904546
(71) Applicant: PRATT & WHITNEY CANADA CORP., Longueuil, Québec J4G 1A1 (CA)
(72) Inventor: STOCCO, Thierry, (01BE5) Longueuil, J4G 1A1 (CA); LEGHZAOUNI, Othmane, (01BE5) Longueuil, J4G 1A1 (CA); HUSZAR, Robert, (01BE5) Longueuil, J4G 1A1 (CA); LECUYER, Daniel, (01BE5) Longueuil, J4G 1A1 (CA)
(74) Representative: Dehns

(57) **Abstract**

An apparatus is provided for a turbine engine. This apparatus includes a rotor blade (72) configured to rotate about an axis (24). The rotor blade (72) includes a base (78) and an airfoil (76). The base (78) includes a platform (82), an attachment (86), a pocket (88) and a contoured side surface. The pocket (88) is located radially between the platform (82) and the attachment (86). The pocket (88) projects radially outward into the base (78) and along the contoured side surface to the platform (82). The pocket (88) extends axially within the base (78) and along the contoured side surface between opposing axial ends of the pocket (88). The pocket (88) projects laterally into the base (78) to the contoured side surface. The contoured side surface includes a plurality of convex sections arranged axially along the axis (24) between the opposing axial ends of the pocket (88). The airfoil (76) projects radially outward from the platform (82) to a tip (96) of the airfoil (76).

## Description

### TECHNICAL FIELD

This disclosure relates generally to an aircraft and, more particularly, to a rotor blade for the aircraft.

### BACKGROUND INFORMATION

A bladed rotor of a gas turbine engine typically includes a plurality of rotor blades arranged around and mounted to a rotor disk. Various types of rotor blades are known in the art. While these known rotor blades have various benefits, there is still room in the art for improvement.

### SUMMARY

According to an aspect of the present disclosure, an apparatus is provided for a turbine engine. This apparatus includes a rotor blade configured to rotate about an axis. The rotor blade includes a base and an airfoil. The base includes a platform, an attachment, a pocket and a contoured side surface. The pocket is located radially between the platform and the attachment. The pocket projects radially outward into the base and along the contoured side surface to the platform. The pocket extends axially within the base and along the contoured side surface between opposing axial ends of the pocket. The pocket projects laterally into the base to the contoured side surface. The contoured side surface includes a plurality of convex sections arranged axially along the axis between the opposing axial ends of the pocket. The airfoil projects radially outward from the platform to a tip of the airfoil.

According to another aspect of the present disclosure, another apparatus is provided for a turbine engine, which the Applicant expressly reserves the right to claim independently. This apparatus includes a rotor blade, and the rotor blade includes a base, an airfoil and a cooling circuit. The rotor blade extends along a span line from an inner end of the base to an outer tip of the airfoil. The base includes a platform, an attachment and a contoured side surface spanwise between the platform and the attachment. The contoured side surface includes a first convex section, a second convex section and a concave section when viewed in a reference plane perpendicular to the span line. The concave section extends between the first convex section and the second convex section. The airfoil is connected to the base and projects spanwise out from the platform to the outer tip of the airfoil. The cooling circuit includes a first cooling channel and a second cooling channel. The first cooling channel projects spanwise into the base from the inner end of the base and is aligned with the first convex section in the reference plane. The second cooling channel projects spanwise into the base from the inner end of the base and is aligned with the second convex section in the reference plane.

According to still another aspect of the present disclosure, another apparatus is provided for a turbine engine, which the Applicant expressly reserves the right to claim independently. This apparatus includes a rotor blade configured to rotate about an axis. The rotor blade includes a base and an airfoil. The base includes a platform, an attachment, a pocket and a laterally undulating side surface. The pocket is located radially between the platform and the attachment. The pocket projects radially outward into the base and along the laterally undulating side surface to the platform. The pocket extends axially within the base and along the laterally undulating side surface between opposing axial ends of the pocket. The pocket projects laterally into the base to the laterally undulating side surface. The laterally undulating side surface includes a plurality of lateral undulations located at discrete locations axially along the axis between the opposing axial ends of the pocket. The airfoil projects radially outward from the platform to a tip of the airfoil.

The cooling circuit may also include a plenum. The first cooling channel and the second cooling channel may each project spanwise to the plenum. The first convex section and the second convex section may spanwise overlap the plenum.

The base may also include a pocket. The pocket may project spanwise into the base and along the contoured side surface to the platform. The pocket may extend widthwise within the base and along the contoured side surface between opposing ends of the pocket. The pocket may project depthwise into the base to the contoured side surface.

The convex sections may include a first convex section and a second convex section. The contoured side surface may also include a first concave section extending axially from the first convex section to the second convex section.

The convex sections may also include a third convex section. The contoured side surface may also include a second concave section extending axially from the second convex section to the third convex section.

The contoured side surface may also include a second concave section extending axially from a first of the opposing axial ends of the pocket to the first convex section.

The platform may extend axially from a leading edge of the platform to a trailing edge of the platform. The first of the opposing axial ends of the pocket may be axially between the leading edge of the platform and a second of the opposing axial ends of the pocket.

The platform may extend axially from a leading edge of the platform to a trailing edge of the platform. The first of the opposing axial ends of the pocket may be axially between the trailing edge of the platform and a second of the opposing axial ends of the pocket.

The pocket may have an axial pocket length between the opposing axial ends of the pocket. The first convex section may have an axial section length that is equal to or less than one-half of the axial pocket length.

The pocket may have an axial pocket length between the opposing axial ends of the pocket. The first convex section may have an axial section length that is equal to or less than one-third of the axial pocket length.

The convex sections may include a first convex section and a second convex section. The rotor blade may also include a cooling circuit with a first cooling channel and a second cooling channel. The first cooling channel may project radially outward into the base from an inner end of the attachment. The first cooling channel may be aligned axially with the first convex section along the axis. The second cooling channel may project radially outward into the base from the inner end of the attachment. The second cooling channel may be aligned axially with the second convex section along the axis.

The cooling circuit may also include a plenum. The first cooling channel and the second cooling channel may each project radially outward to the plenum. The first convex section and the second convex section may radially and axially overlap the plenum.

The first cooling channel and the second cooling channel may each meet the plenum at a location radially inboard of the contoured side surface.

The convex sections may include a first convex section and a second convex section. The rotor blade may also include a cooling circuit with a plenum. The first convex section and the second convex section may radially and axially overlap the plenum.

The pocket may be disposed to a suction side of the rotor blade.

The pocket may be disposed to a pressure side of the rotor blade.

The base may also include a second pocket and a second contoured side surface. The second pocket may be located radially between the platform and the attachment. The second pocket may project radially outward into the base and along the second contoured side surface to the platform. The second pocket may extend axially within the base and along the second contoured side surface between opposing axial ends of the second pocket. The second pocket may project laterally into the base to the second contoured side surface. The second contoured side surface may include one or more second convex sections arranged axially along the axis between the opposing axial ends of the second pocket. The pocket and the second pocket may be located at opposing lateral sides of the base.

The apparatus may also include a turbine section of the turbine engine. The turbine section may include the rotor blade.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side schematic illustration of a powerplant of an aircraft propulsion system.
FIG. 2 is a partial end view schematic illustration of an engine rotor.
FIG. 3 is a side schematic illustration of the rotor blade.
FIG. 4 is a cross-sectional illustration of an airfoil of the rotor blade.
FIG. 5 is an end-view sectional illustration of a portion of the rotor blade.
FIG. 6 is a cross-sectional illustration of a portion of the rotor blade with an airfoil and cooling channels overlayed thereon.
FIG. 7 is a perspective illustration of a portion of the rotor blade at a suction side pocket.

### DETAILED DESCRIPTION

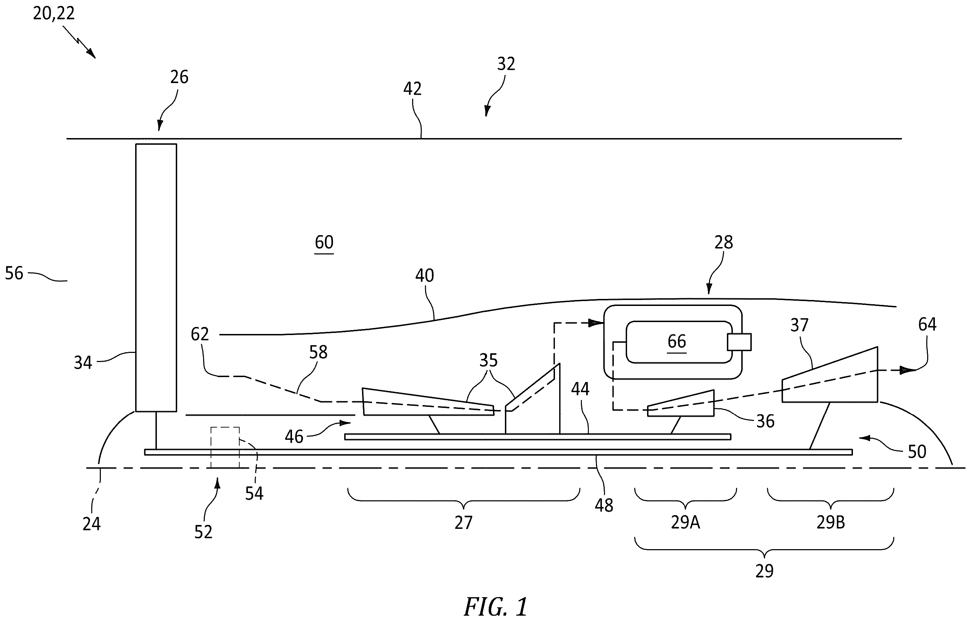

FIG. 1 illustrates a powerplant 20 of a propulsion system for an aircraft. The aircraft may be an airplane, a rotorcraft (e.g., a helicopter), a drone (e.g., an unmanned aerial vehicle (UAV)), or any other manned or unmanned aerial vehicle or system. For ease of description, the aircraft propulsion system is described below as a ducted rotor propulsion system such as a turbofan propulsion system, and the aircraft powerplant 20 is described below as a gas turbine engine 22 such as a turbofan engine. The present disclosure, however, is not limited to such an exemplary aircraft propulsion system. The aircraft propulsion system, for example, may alternatively be configured as a turbojet propulsion system, a turboprop propulsion system, a turboshaft propulsion system or an open rotor propulsion system. Moreover, the present disclosure is not limited to propulsion system applications. The turbine engine 22, for example, may alternatively be configured as or included as part of an auxiliary power unit (APU) for the aircraft, a ground-based (e.g., industrial) electrical power system or a marine-based propulsion and/or electrical power system.

The turbine engine 22 of FIG. 1 extends axially along an axis 24 between a forward, upstream end of the turbine engine 22 and an aft, downstream end of the turbine engine 22. Briefly, the axis 24 may be a centerline axis of the turbine engine 22 and/or one or more of its members. The axis 24 may also or alternatively be a rotational axis for one or more members of the turbine engine 22. The turbine engine 22 of FIG. 1 includes a propulsor section 26 (e.g., a fan section), a compressor section 27, a combustor section 28 and a turbine section 29. The turbine section 29 includes a high pressure turbine (HPT) section 29A and a low pressure turbine (LPT) section 29B.

The engine sections 26-29B may be arranged along the axis 24 within a stationary engine housing 32. The propulsor section 26 includes a bladed propulsor rotor 34; e.g., a fan rotor. The compressor section 27 includes one or more bladed compressor rotors 35. The HPT section 29A includes a bladed high pressure turbine (HPT) rotor 36. The LPT section 29B includes a bladed low pressure turbine (LPT) rotor 37; e.g., a power turbine (PT) rotor. These engine rotors 34-37 are housed within the engine housing 32. The engine housing 32 of FIG. 1, for example, includes an inner housing structure 40 (e.g., a core case structure) and an outer housing structure 42 (e.g., a propulsor case structure). The inner housing structure 40 may house one or more of the engine sections 27-29B and their engine rotors 35-37. The outer housing structure 42 may house at least the propulsor section 26 and its propulsor rotor 34.

The compressor rotors 35 are coupled to and rotatable with the HPT rotor 36. The compressor rotors 35 of FIG. 1, for example, are connected to the HPT rotor 36 through a high speed shaft 44. At least (or only) the compressor rotors 35, the HPT rotor 36 and the high speed shaft 44 collectively form a high speed rotating assembly 46; e.g., a high speed spool of a core of the turbine engine 22. This high speed rotating assembly 46 of FIG. 1 and its members 35, 36 and 44 are rotatable about the axis 24.

The LPT rotor 37 of FIG. 1 is connected to a low speed shaft 48. At least (or only) the LPT rotor 37 and the low speed shaft 48 collectively form a low speed rotating assembly 50; e.g., a low speed spool of the engine core. This low speed rotating assembly 50 is further coupled to the propulsor rotor 34 through a drivetrain 52. This drivetrain 52 may be configured as a geared drivetrain, where a geartrain 54 (e.g., a transmission, a speed change device, an epicyclic geartrain, etc.) is disposed between and operatively couples the propulsor rotor 34 to the low speed rotating assembly 50 and its LPT rotor 37. With this arrangement, the propulsor rotor 34 may rotate at a different (e.g., slower) rotational speed than the low speed rotating assembly 50 and its LPT rotor 37. Here, the propulsor rotor 34 and the low speed rotating assembly 50 may rotate in a common (the same) direction about the axis 24 or in opposite directions about the axis 24 depending, for example, upon the specific configuration of the geartrain 54. Alternatively, the drivetrain 52 may be configured as a direct drive drivetrain, where the geartrain 54 is omitted. With such an arrangement, the propulsor rotor 34 rotates at a common (the same) rotational speed as the low speed rotating assembly 50 and its LPT rotor 37. The low speed rotating assembly 50 of FIG. 1 and its members 37 and 48 as well as the propulsor rotor 34 may be rotatable about the axis 24.

During operation, ambient air from outside of the aircraft enters the aircraft powerplant 20 and its turbine engine 22 through an airflow inlet 56. This air is directed across the propulsor section 26 and into a (e.g., annular) core flowpath 58 and a (e.g., annular) bypass flowpath 60. The core flowpath 58 of FIG. 1 extends sequentially through the compressor section 27, the combustor section 28, the HPT section 29A and the LPT section 29B from an airflow inlet 62 into the core flowpath 58 to a combustion products exhaust 64 out from the core flowpath 58 and the engine core. The air entering the core flowpath 58 may be referred to as "core air". The bypass flowpath 60 extends through a bypass duct, which bypass flowpath 60 bypasses (e.g., is disposed radially outboard of and extends along) the engine core. The air within the bypass flowpath 60 may be referred to as "bypass air".

The core air is compressed by the compressor rotors 35 and is directed into a (e.g., annular) combustion chamber 66 of a (e.g., annular) combustor in the combustor section 28. Fuel is injected into the combustion chamber 66 by one or more fuel injectors and mixed with the compressed core air to provide a fuel-air mixture. This fuel-air mixture is ignited and combustion products thereof flow through and sequentially drive rotation of the HPT rotor 36 and the LPT rotor 37 about the axis 24. The rotation of the HPT rotor 36 drives rotation of the compressor rotors 35 about the axis 24 and, thus, compression of the air received from the core inlet 62. The rotation of the LPT rotor 37 drives rotation of the propulsor rotor 34 through the drivetrain 52. The rotation of the propulsor rotor 34 propels the bypass air through and out of the bypass flowpath 60. The propulsion of the bypass air may account for a majority of thrust generated by the turbine engine 22 of FIG. 1.

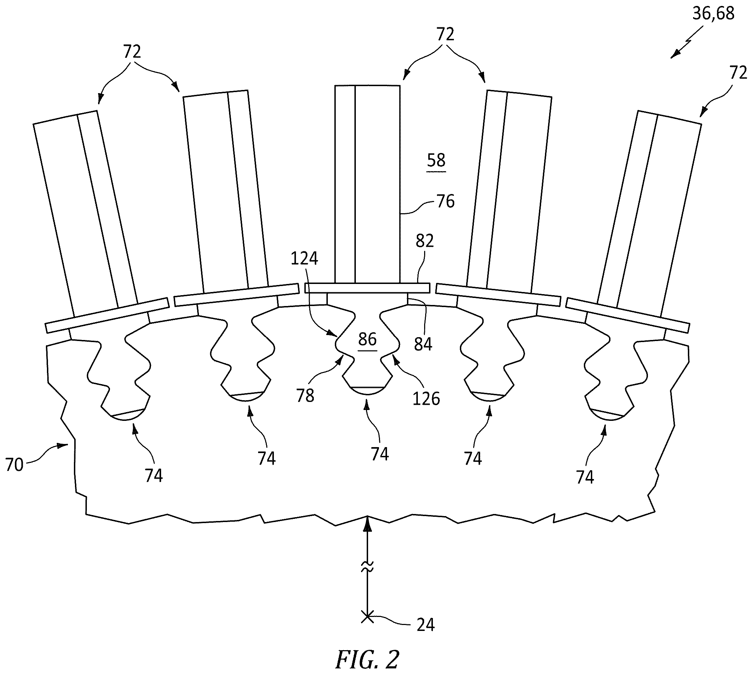

FIG. 2 illustrates a portion of a bladed engine rotor 68 such as a turbine rotor. For ease of description, this engine rotor 68 is described below as being configured as or otherwise included as part of the HPT rotor 36 in FIG. 1. It is contemplated, however, the engine rotor 68 may alternatively be configured as or otherwise included as part of the LPT rotor 37 in FIG. 1 or any other bladed rotor included in a turbine engine which utilizes cooling air. The engine rotor 68 of FIG. 2 includes a rotor disk 70 (e.g., a turbine disk) and a plurality of rotor blades 72 (e.g., turbine blades).

The rotor disk 70 includes a plurality of disk slots 74. These disk slots 74 are arranged and may be equispaced circumferentially about the axis 24 in an annular array; e.g., a circular array. Each disk slot 74 may be configured as a firtree slot. The present disclosure, however, is not limited to such an exemplary geometry. For example, in other embodiments, each disk slot 74 may alternatively be configured as a dovetail slot or a slot with another flared and/or keyed geometry.

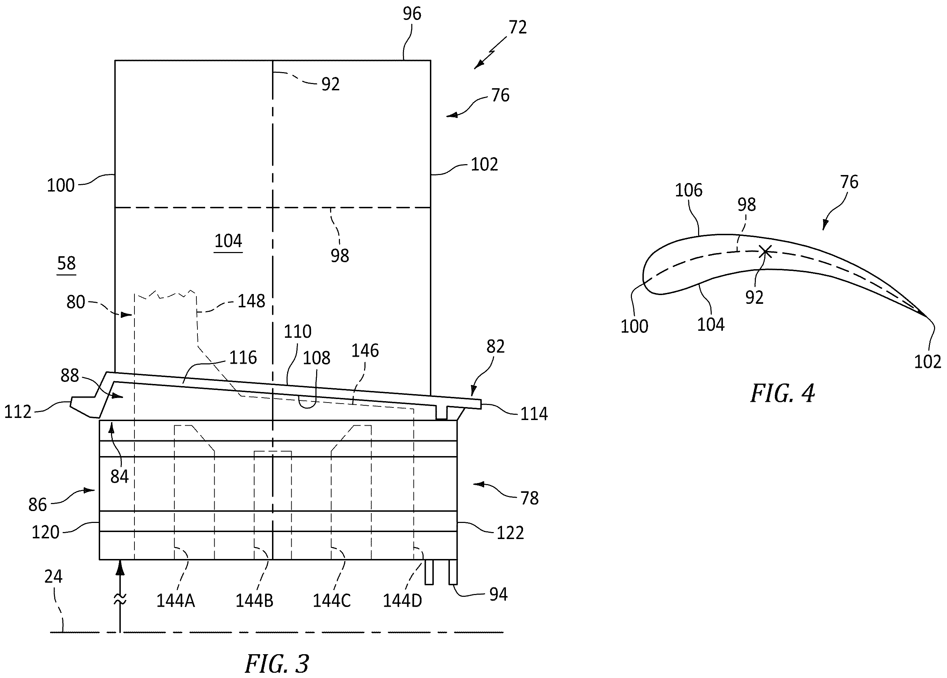

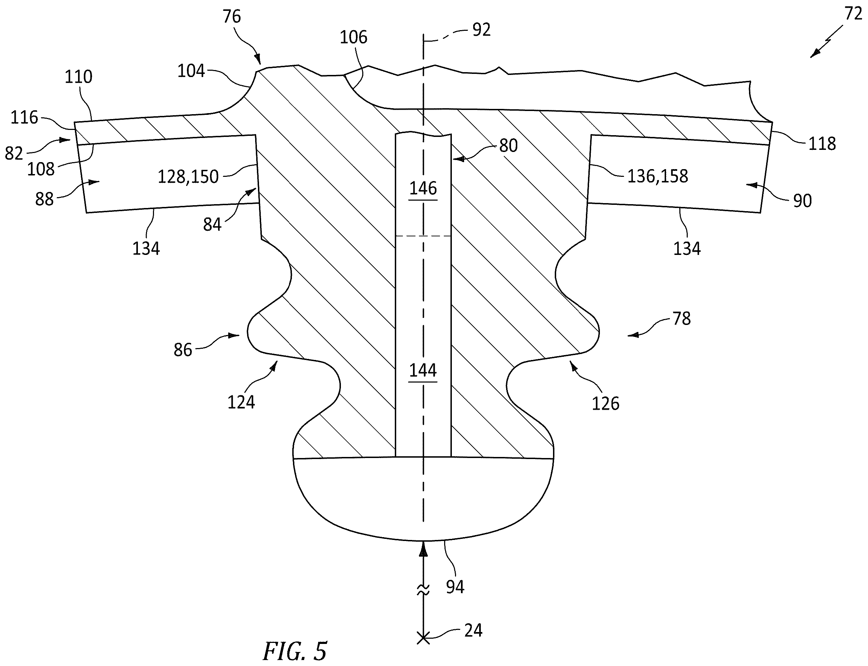

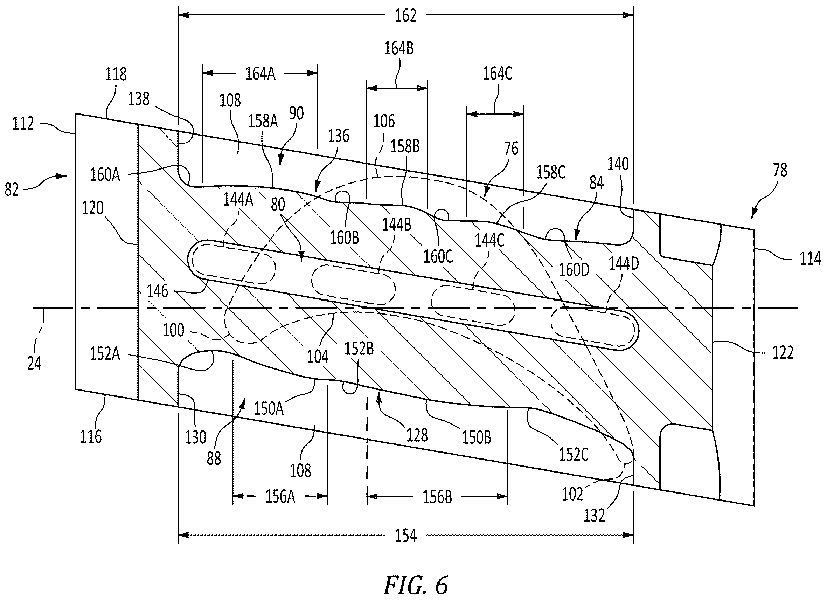

Referring to FIG. 3, each rotor blade 72 includes an airfoil 76, a base 78 and an internal air cooling circuit 80. The blade base 78 includes a platform 82, a neck 84, an attachment 86 and one or more pockets 88 and 90 (see FIGS. 5 and 6). The rotor blade 72 of FIG. 3 projects spanwise along a span line 92 of the respective rotor blade 72 and radially outwards (e.g., away from the axis 24) from an inner end 94 (e.g., a bottom end) of the respective rotor blade 72 and its blade base 78 to an outer tip 96 of the respective rotor blade 72 and its blade airfoil 76.

The blade airfoil 76 projects spanwise and radially out from the blade platform 82 to the blade tip 96. The blade airfoil 76 extends longitudinally along a longitudinal mean line 98 (e.g., a camber line) of the blade airfoil 76 from an upstream leading edge 100 of the blade airfoil 76 to a downstream trailing edge 102 of the blade airfoil 76. Referring to FIG. 4, the blade airfoil 76 extends widthwise between a concave, pressure side 104 of the blade airfoil 76 and a convex, suction side 106 of the blade airfoil 76. These airfoil sides 104 and 106 extend longitudinally between and meet at the airfoil leading edge 100 and the airfoil trailing edge 102. Referring to FIG. 3, each of the airfoil members 100, 102, 104 and 106 (see also FIG. 4) may project spanwise and radially outward from the blade platform 82 to the blade tip 96.

The blade platform 82 is disposed spanwise and radially between the blade airfoil 76 and the blade neck 84. The blade platform 82 of FIG. 3 is also connected to (e.g., formed integral with or otherwise attached to) the blade airfoil 76 and the blade neck 84. The blade platform 82 extends spanwise and radially between a radial inner side 108 of the blade platform 82 and a radial outer side 110 of the blade platform 82. The platform inner side 108 is disposed radially next to the blade neck 84. The platform outer side 110 is disposed radially next to the blade airfoil 76. This platform outer side 110 is configured to form a portion of a radial inner peripheral boundary of the core flowpath 58 longitudinally along the respective rotor blade 72. The blade airfoil 76 thereby projects radially out from the blade platform 82 into the core flowpath 58. The blade platform 82 extends axially along the axis 24 from an upstream leading edge 112 of the blade platform 82 to a downstream trailing edge 114 of the blade platform 82. Referring to FIG. 5, the blade platform 82 extends laterally (e.g., generally circumferentially about the axis 24) between and to opposing lateral sides 116 and 118 of the respective rotor blade 72 and its blade platform 82. The platform pressure side 116 is disposed laterally to the airfoil pressure side 104. The platform suction side 118 is disposed laterally to the airfoil suction side 106.

Referring to FIG. 3, the blade neck 84 is disposed spanwise and radially between the blade platform 82 and the blade attachment 86. The blade neck 84 of FIG. 3 is also connected to (e.g., formed integral with or otherwise attached to) the blade attachment 86. The blade neck 84 projects spanwise and radially out from the blade attachment 86 to the blade platform 82 at its platform inner side 108. The blade neck 84 extends axially along the axis 24 from an upstream end 120 of the blade attachment 86 to a downstream end 122 of the blade attachment 86. Here, the attachment upstream end 120 is upstream of the attachment downstream end 122 relative to the flow of gas (e.g., the combustion products) within the core flowpath 58 longitudinally across the respective rotor blade 72. Referring to FIG. 5, the blade neck 84 extends laterally between and to the opposing lateral sides 116 and 118 of the rotor blade 72.

Referring to FIG. 3, the blade attachment 86 projects spanwise and radially inwards (e.g., towards the axis 24) out from the blade neck 84 to (or about) the blade inner end 94; e.g., an inner, bottom end of the blade attachment 86. The blade attachment 86 extends axially along the axis 24 from the attachment upstream end 120 to the attachment downstream end 122. Here, the attachment upstream end 120 is axially recessed (e.g., set back) from the platform leading edge 112. The attachment downstream end 122 is also axially recessed from the platform trailing edge 114. Referring to FIG. 2, the blade attachment 86 extends laterally between and to opposing lateral sides 124 and 126 of the blade attachment 86. Each of these attachment lateral sides 124 and 126 may be at least partially or completely formed by a respective laterally undulating (e.g., a wavy, splined) surface of the blade attachment 86. With this arrangement, the blade attachment 86 may be configured as a firtree root. The present disclosure, however, is not limited to such an exemplary geometry. For example, in other embodiments, the blade attachment 86 may alternatively be configured as a dovetail root or a root with another flared and/or keyed geometry. With this configuration, the blade attachment 86 is configured to mate with a respective disk slot 74 and thereby attach the respective rotor blade 72 to the rotor disk 70.

Referring to FIG. 6, the pressure side pocket 88 is disposed laterally to the airfoil pressure side 104 / the platform pressure side 116. This pressure side pocket 88 of FIG. 6, for example, projects partially laterally into the blade base 78 and its blade neck 84 from the platform pressure side 116 to a pressure side surface 128 of the blade base 78 and its blade neck 84. The pressure side pocket 88 extends axially within the blade base 78 and its blade neck 84, and along the pressure side surface 128, between and to opposing axial ends 130 and 132 of the pressure side pocket 88. The pressure side pocket 88 also projects spanwise and radially outward partially into the blade base 78 and its blade neck 84 from or about a radial inner end 134 of the blade neck 84 (see FIG. 5), and along the pressure side surface 128, to the blade platform 82 at its platform inner side 108.

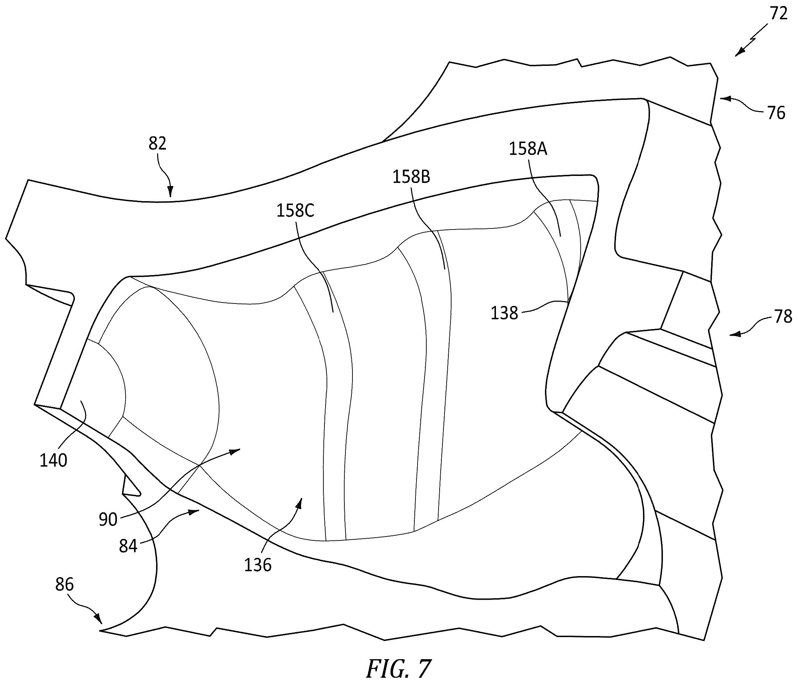

The suction side pocket 90 is disposed laterally to the airfoil suction side 106 / the platform suction side 118. This suction side pocket 90 of FIG. 6, for example, projects partially laterally into the blade base 78 and its blade neck 84 from the platform suction side 118 to a suction side surface 136 of the blade base 78 and its blade neck 84. The suction side pocket 90 extends axially within the blade base 78 and its blade neck 84, and along the suction side surface 136, between and to opposing axial ends 138 and 140 of the suction side pocket 90. The suction side pocket 90 also projects spanwise and radially outward partially into the blade base 78 and its blade neck 84 from or about the radial inner end 134 of the blade neck 84 (see FIG. 5), and along the suction side surface 136, to the blade platform 82 at its platform inner side 108; see also FIG. 7.

Referring to FIG. 3, the cooling circuit 80 is configured to direct cooling air (e.g., air bled from the core flowpath 58 upstream of the combustion chamber 66 of FIG. 1) into the respective rotor blade 72, for example, to facilitate film cooling of the blade airfoil 76 and/or the blade platform 82 during turbine engine operation. The cooling circuit 80 of FIG. 3 includes one or more internal air cooling channels 144A-D (generally referred to as "144"), an internal air plenum 146 (e.g., a manifold) and at least one air cooling passage 148 (or multiple air cooling passages). The cooling channels 144 are arranged and spaced apart in a (e.g., linear) array along the axis 24 within the blade base 78. Each of these cooling channels 144 projects spanwise and radially outward into the blade base 78 (e.g., partially into or through the blade attachment 86) from the blade inner end 94 to the air plenum 146. The air plenum 146 extends spanwise and radially within the blade base 78 and one or more of its members 84 and/or 86 from the cooling channels 144 to the cooling passage 148. The air plenum 146 thereby fluidly couples each of the cooling channels 144 to the cooling passage 148, which cooling passage 148 directs the cooling air into the blade airfoil 76 for cooling.

Referring to FIG. 6, the air plenum 146 is located laterally between (a) the pressure side pocket 88 and its pressure side surface 128 and (b) the suction side pocket 90 and its suction side surface 136. The pressure side pocket 88 and its pressure side surface 128 may be axially and radially aligned with the air plenum 146. More particularly, the pressure side pocket 88 and its pressure side surface 128 axially and radially overlap (e.g., extend along) the air plenum 146. Similarly, the suction side pocket 90 and its suction side surface 136 are axially and radially aligned with the air plenum 146. More particularly, the suction side pocket 90 and its suction side surface 136 axially and radially overlap the air plenum 146. By contrast, referring to FIG. 5, one, some or all of the cooling channels 144 may be located radially inboard of the (a) the pressure side pocket 88 and its pressure side surface 128 and (b) the suction side pocket 90 and its suction side surface 136.

Referring to FIG. 6, the blade pockets 88 and 90 are configured in the blade base 78 such that the blade neck 84 may gradually transfer loads from the blade airfoil 76 to the blade attachment 86. The blade neck 84 may also be configured to tailor heat transfer from the blade airfoil 76 into the blade attachment 86. To enhance load distribution from the blade airfoil 76 to the blade attachment 86 as well as reduce localized stresses within the blade neck 84, each pocket side surface 128, 136 may be configured as a (e.g., unique) contoured side surface; e.g., a wavy side surface, a laterally undulating side surface, etc. More particularly, when viewed in a reference plane perpendicular to the span line 92, each pocket side surface 128, 136 may be configured with one or more lateral undulations located at discrete axial locations between the opposing axial ends 130 and 132, 138 and 140 of the respective blade pocket 88, 90.

With the undulating arrangement of FIG. 6, the pressure side surface 128 is configured with one or more pressure side convex sections 150A and 150B (generally referred to as "150") (e.g., curved peaks in the pressure side surface 128) interspersed with one or more pressure side concave sections 152A-C (e.g., curved valleys in the pressure side surface 128). The upstream pressure side concave section 152A extends axially from the upstream axial end 130 of the pressure side pocket 88 to the upstream pressure side convex section 150A. The upstream pressure side convex section 150A extends axially from the upstream pressure side concave section 152A to the intermediate pressure side concave section 152B. The intermediate pressure side concave section 152B extends axially from the upstream pressure side convex section 150A to the downstream pressure side convex section 150B. The downstream pressure side convex section 150B extends axially from the intermediate pressure side concave section 152B to the downstream pressure side concave section 152C. The downstream pressure side concave section 152C extends axially from the downstream pressure side convex section 150B to the downstream axial end 132 of the pressure side pocket 88. In the arrangement of FIG. 6, the upstream pressure side convex section 150A and/or the downstream pressure side convex section 150B may each be axially aligned with a respective one of the cooling channels 144B, 144C. However, axial centers of the pressure side convex sections 150A, 150B need not be exactly axially aligned with axial centers of the respective cooling channels 144B, 144C. Moreover, the upstream pressure side convex section 150A and/or the downstream pressure side convex section 150B may each radially and axially overlap the air plenum 146.

The pressure side pocket 88 has an axial length 154 measured between the opposing axial ends 130 and 132 of the pressure side pocket 88. Each pressure side convex section 150A, 150B has an axial length 156A, 156B measured between the pressure side concave sections on either opposing axial side of the respective pressure side convex section. Here, the pressure side convex section length 156A, 156B is measured between points of inflection between the respective convex and concave sections. This pressure side convex section length 156A, 156B is sized smaller than the pressure side pocket length 154. The pressure side convex section length 156A, 156B, for example, may be equal to or less than one-half (1/2), one-third (1/3) or one-quarter (1/4) of the pressure side pocket length 154. Moreover, the pressure side convex section length 156A may be different than the pressure side convex section length 156B.

With the undulating arrangement of FIG. 6, the suction side surface 136 is configured with one or more suction side convex sections 158A-C (generally referred to as "158") (e.g., curved peaks in the suction side surface 136) interspersed with one or more suction side concave sections 160A-D (e.g., curved valleys in the suction side surface 136). The upstream suction side concave section 160A extends axially from the upstream axial end 138 of the suction side pocket 90 to the upstream suction side convex section 158A. The upstream suction side convex section 158A extends axially from the upstream suction side concave section 160A to the upstream-intermediate suction side concave section 160B. The upstream-intermediate suction side concave section 160B extends axially from the upstream suction side convex section 158A to the intermediate suction side convex section 158B. The intermediate suction side convex section 158B extends axially from the upstream-intermediate suction side concave section 160B to the downstream-intermediate suction side concave section 160C. The downstream-intermediate suction side concave section 160C extends axially from the intermediate suction side convex section 158B to the downstream suction side convex section 158C. The downstream suction side convex section 158C extends axially from the downstream-intermediate suction side concave section 160C to the downstream suction side concave section 160D. The downstream suction side concave section 160D extends axially from the downstream suction side convex section 158C to the downstream axial end 140 of the suction side pocket 90. In the arrangement of FIG. 6, the upstream suction side convex section 158A, the intermediate suction side convex section 158B and/or the downstream suction side convex section 158C may each be axially aligned with a respective one of the cooling channels 144A, 144B, 144C. However, axial centers of the suction side convex sections 152A-C need not be exactly axially aligned with axial centers of the respective cooling channels 144A, 144B, 144C. Moreover, the upstream suction side convex section 158A, the intermediate suction side convex section 158B and/or the downstream suction side convex section 158C may each radially and axially overlap the air plenum 146.

The suction side pocket 90 has an axial length 162 measured between the opposing axial ends 138 and 140 of the suction side pocket 90. Each suction side convex section 158A-C has an axial length 164A-C measured between the suction side concave sections on either opposing axial side of the respective suction side convex section. Here, the suction side convex section length 164A-C is measured between points of inflection between the respective convex and concave sections. This suction side convex section length 164A-C is sized smaller than the suction side pocket length 162. The suction side convex section length 164A-C, for example, may be equal to or less than one-half (1/2), one-third (1/3) or one-quarter (1/4) of the suction side pocket length 162. Moreover, the suction side convex section length 164A may be different than the suction side convex section length 164B and/or the suction side convex section length 164C.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for a turbine engine (22) comprising:
a rotor blade (72) configured to rotate about an axis (24) and including a base (78) and an airfoil (76);
the base (78) including a platform (82), an attachment (86), a pocket (88; 90) and a contoured side surface (128; 136), the pocket (88; 90) located radially between the platform (82) and the attachment (86), the pocket (88; 90) projecting radially outward into the base (78) and along the contoured side surface (128; 136) to the platform (82), the pocket (88; 90) extending axially within the base (78) and along the contoured side surface (128; 136) between opposing axial ends (130, 132; 138, 140) of the pocket (88; 90), the pocket (88; 90) projecting laterally into the base (78) to the contoured side surface (128; 136), and the contoured side surface (128; 136) including a plurality of convex sections (150A, 150B; 158A, 158B, 158C) arranged axially along the axis (24) between the opposing axial ends (130, 132; 138, 140) of the pocket (88; 90); and
the airfoil (76) projecting radially outward from the platform (82) to a tip (96) of the airfoil (76).

2. The apparatus of claim 1, wherein:
the plurality of convex sections (150A...158C) includes a first convex section (150A; 158A) and a second convex section (150B; 158B); and
the contoured side surface (128; 136) further includes a first concave section (152B; 160B) extending axially from the first convex section (150A; 158A) to the second convex section (150B; 158B).

3. The apparatus of claim 2, wherein:
the plurality of convex sections (158A, 158B, 158C) further includes a third convex section (158C); and
the contoured side surface (136) further includes a second concave section (160C) extending axially from the second convex section (158B) to the third convex section (158C).

4. The apparatus of claim 2, wherein the contoured side surface (128) further includes a second concave section (152A; 152C) extending axially from a first of the opposing axial ends (130; 132) of the pocket (88) to the first convex section (150A; 150B).

5. The apparatus of claim 4, wherein the platform (82) extends axially from a leading edge (112) of the platform (82) to a trailing edge (114) of the platform (82), and the first of the opposing axial ends (130) of the pocket (88) is axially between the leading edge (112) of the platform (82) and a second of the opposing axial ends (132) of the pocket (88).

6. The apparatus of claim 4, wherein the platform (82) extends axially from a leading edge (112) of the platform (82) to a trailing edge (114) of the platform (82), and the first of the opposing axial ends (132) of the pocket (88) is axially between the trailing edge (114) of the platform (82) and a second of the opposing axial ends (130) of the pocket (88).

7. The apparatus of any of claims 2 to 6, wherein
the pocket (88; 90) has an axial pocket length (154; 162) between the opposing axial ends (130, 132; 138, 140) of the pocket (88; 90); and
the first convex section (150A; 158A) has an axial section length (156A; 164A) that is equal to or less than one-half of the axial pocket length (154; 162).

8. The apparatus of any of claims 2 to 6, wherein
the pocket (88; 90) has an axial pocket length (154; 162) between the opposing axial ends (130, 132; 138, 140) of the pocket (88; 90); and
the first convex section (150A; 158A) has an axial section length (156A; 164A) that is equal to or less than one-third of the axial pocket length (154; 162).

9. The apparatus of claim 1, wherein
the plurality of convex sections (150A...158C) includes a first convex section (150A; 158A) and a second convex section (150B; 158B);
the rotor blade (72) further includes a cooling circuit (80) with a first cooling channel (144A) and a second cooling channel (144B);
the first cooling channel (144A) projects radially outward into the base (78) from an inner end (94) of the attachment (86), and the first cooling channel (144A) is aligned axially with the first convex section (150A) along the axis (24); and
the second cooling channel (144B) projects radially outward into the base (72) from the inner end (94) of the attachment (86), and the second cooling channel (144B) is aligned axially with the second convex section (150B) along the axis (24).

10. The apparatus of claim 9, wherein
the cooling circuit (80) further includes a plenum (146);
the first cooling channel (144A) and the second cooling channel (144B) each project radially outward to the plenum (146); and
the first convex section (150A) and the second convex section (150B) radially and axially overlap the plenum (146),
optionally wherein the first cooling channel (144A) and the second cooling channel (144B) each meet the plenum (146) at a location radially inboard of the contoured side surface (128).

11. The apparatus of claim 1, wherein
the plurality of convex sections (150A...158C) include a first convex section (150A) and a second convex section (150B);
the rotor blade (72) further includes a cooling circuit (80) with a plenum (146); and
the first convex section (150A) and the second convex section (150B) radially and axially overlap the plenum (146).

12. The apparatus of any preceding claim, wherein the pocket (90) is disposed to a suction side (106) of the rotor blade (72).

13. The apparatus of any of claims 1 to 11, wherein the pocket (88) is disposed to a pressure side (104) of the rotor blade (72).

14. The apparatus of any preceding claim, wherein the base (78) further includes a second pocket (90; 88) and a second contoured side surface (136; 128), wherein
the second pocket (90; 88) is located radially between the platform (82) and the attachment (86), the second pocket (90; 88) projects radially outward into the base (78) and along the second contoured side surface (136; 128) to the platform (82), the second pocket (90; 88) extends axially within the base (78) and along the second contoured side surface (136; 128) between opposing axial ends (138, 140; 130, 132) of the second pocket (90; 88), the second pocket (90; 88) projects laterally into the base (78) to the second contoured side surface (136; 128), and the second contoured side surface (136; 128) includes one or more second convex sections (158A, 158B, 158C; 150A, 150B) arranged axially along the axis (24) between the opposing axial ends (138, 140; 130, 132) of the second pocket (90; 88); and
the pocket (88; 90) and the second pocket (90; 88) are located at opposing lateral sides (116, 118) of the base (78).

15. The apparatus of any preceding claim, further comprising a turbine section (29) of the turbine engine (22), the turbine section (29) comprising the rotor blade (72).
